Europäisches Patentamt

European Patent Office

Office européen des brevets

(11) Veröffentlichungsnummer: **0 385 261**
**A1**

## (12) EUROPÄISCHE PATENTANMELDUNG

(21) Anmeldenummer: **90103397.7**

(51) Int. Cl.⁵: **B65G 49/00, B65G 37/00**

(22) Anmeldetag: **22.02.90**

(30) Priorität: **01.03.89 DE 3906423**
**10.02.90 DE 4004160**

(43) Veröffentlichungstag der Anmeldung:
**05.09.90 Patentblatt 90/36**

(84) Benannte Vertragsstaaten:
**AT BE CH DE DK ES FR GB GR IT LI LU NL SE**

(71) Anmelder: **BLÜCO-TECHNIK BLÜMLE KG**
**Waldburgstrasse 15**
**D-7000 Stuttgart 80(DE)**

(72) Erfinder: **Blümle, Rudi**
**Schwarzbachstrasse 52**
**D-7000 Stuttgart 80(DE)**

(74) Vertreter: **Otte, Peter, Dipl.-Ing.**
**Tiroler Strasse 15**
**D-7250 Leonberg(DE)**

(54) **Manuell betätigbare flexible Transport- oder Montageeinrichtung für Paletten.**

(57) Bei einer manuell betätigbaren flexiblen Transport-oder Montageeinrichtung für (zu bearbeitende) Werkstücke tragende Paletten, Spannplatten u. dgl. ist mindestens ein, mehrere Palettenplätze aufweisender Palettenpuffertisch (11), mindestens ein zugeordneter Arbeitstisch (12) und mindestens eine Transferbrücke (13) zwischen Palettenpuffertisch (11) und Arbeitstisch (12) vorgesehen, die zur manuellen Verschiebung der Paletten eine Rollreibung ermöglichende stationäre Trageelemente aufweist, während zur manuellen Verschiebung in beliebige Richtungen über die jeweiligen Tischoberflächen entweder Kugelrollelemente (15) oder mit Luftdruck arbeitende Hebeeinrichtungen für die Paletten vorgesehen sind.

Fig.2

## Manuell betätigbare flexible Transport- oder Montage-einrichtung für Paletten

Stand der Technik

Die Erfindung geht aus von einer manuell betätigbaren flexiblen Transport- oder Montageeinrichtung für (zu bearbeitende) Werkstücke tragende Paletten für den Vorrichtungsbau, für die Zuführung bestückter Paletten zu Maschinentischen u. dgl. nach dem Oberbegriff des Anspruchs 1.

Zum Transport von mit zu bearbeitenden Werkstücken beladenen Paletten zu den einzelnen Bearbeitungsmaschinen sind schon eine Vielzahl von Systemen bekannt, die alle die Aufgabe haben, Paletten möglichst schnell und kostengünstig zu den einzelnen Werkzeugmaschinen zu transportieren, den Austausch "bearbeiteter" Paletten zu ermöglichen und frische auf den Arbeitstisch der Werkzeugmaschine aufzusetzen, wobei dann die bearbeiteten Paletten mittels zum Teil eigener Transportsysteme abgeführt und an einen gesonderten Vorrichtungsplatz verbracht werden, wo ein erneuter Umbau oder eine Bestückung mit neuen Werkstücken erfolgen kann.

Die Vielfalt solcher Systeme wird am besten deutlich aus dem bestimmte Ausführungsformen von Spannpalettenspeichern darstellenden Aufsatz von Hans-Dieter Wenk "Spanende Werkzeugmaschinen mit Hilfspaletten automatisch beschicken", Zeitschrift Maschinenmarkt, Würzburg 91 (1985), 16, S. 263-266. Dabei ist es üblich, längs oder zwischen den in Reihen aufgestellten Werkzeugmaschinen eine maschinelle, ein eigenes Antriebssystem umfassende Transporteinrichtung, beispielsweise einen auf Schienen laufenden Wagen vorzusehen, der einzelne Paletten hin und her transportieren kann und bestimmte Paletten auf Palettenträger absetzt, andere aufnimmt und den Arbeitstischen der jeweiligen Werkzeugmaschinen zuführt. Dabei ist es auch bekannt, angrenzend zu diesen Arbeitstischen spezielle Palettenwechseleinrichtungen anzuordnen, damit die jeweilige Palette von einer Bereitstellstation zur Arbeitsstation übergeben werden kann, die dann üblicherweise der Arbeitstisch der Werkzeugmaschine ist.

Hierbei ergeben sich eine Vielzahl von Problemen, die besonders dann an Bedeutung gewinnen, wenn es für bestimmte Verarbeitungszwecke oder bestimmte Bearbei tungsstraßen nicht möglich ist, gleichartige Werkzeugmaschinen mit identischer Tischhöhe zur Verfügung zu stellen und in einer Reihe anzuordnen. In diesem Falle ergeben sich sofort Probleme, da die Palettenwechsler, sofern eine Werkzeugmaschine überhaupt über ein solches Gerät verfügt, nur von vorgegebenen Tischhöhen Paletten abnehmen und auf den Arbeitstisch der Werkzeugmaschine umsetzen können bzw. bei Systemen ohne kostenträchtige Palettenwechseleinrichtung ein Transport oder eine Überführung der Paletten von den verfahrbaren Schlitten von den Werkzeugmaschinen auf die einzelnen unterschiedlichen Arbeitshöhen der Werkzeugmaschinentische nicht möglich ist.

In diesem Zusammenhang kann noch problematisch sein die Notwendigkeit, die zum Teil zentnerschweren Paletten auf dem Werkzeugmaschinenarbeitstisch in eine zentrierte Fixposition zu bringen, damit bei numerisch gesteuertem Arbeitsablauf der Zerspanungsvorgang dann beispielsweise vollautomatisch ablaufen kann. Hier kann ein langwieriges Herumrücken und Verschieben der Palette bei ihrer Übergabe vom verfahrbaren Schlitten oder Transportwagen auf den Arbeitstisch notwendig werden, bis die Palette schließlich millimetergenau sitzt und die Zentrierarbeiten abgeschlossen werden können.

Problematisch kann in diesem Zusammenhang ferner sein, daß nicht alle Betriebe beispielsweise der metallverarbeitenden Industrie vollautomatische Palettentransport- und -umsetzsysteme aufweisen bzw. aufweisen können, weil beispielsweise zu unterschiedliche Bearbeitungsmaschinen vorhanden sind oder für bestimmte Aufgaben, beispielsweise in gesonderten Hallen die insbesondere auch von der Kostenseite sehr aufwendigen Palettentransportsysteme nicht eingesetzt werden können.

Es ist auch denkbar, daß kleinere Betriebe zwar über hochwertige Bearbeitungsmaschinen verfügen, jedoch für die häufig sehr unterschiedlichen, individuellen Anforderungen und Bearbeitungssysteme kein auf eine bestimmte Größe oder auf bestimmte Arbeitsabläufe zugeschnittenes spezielles Palettentransportsystem im automatisierten Ablauf einsetzen können.

Hier fehlen dann einfache, kostengünstige Palettentransport- und -transfersysteme, die in individueller Anpassung den einzelnen Bearbeitungsmaschinen unmittelbar zugeordnet werden können oder auch im Vorrichtungsbau Verwendung finden und die es dennoch erlauben, die zum Teil sehr schweren Paletten von einer gemeinsamen Pufferposition manuell zu den einzelnen Arbeitstischen der Bearbeitungsmaschinen zu bringen.

Der Erfindung liegt daher die Aufgabe zugrunde, ein auf dem Gebiet des Palettentransports bisher vernachlässigtes Problem dadurch mit relativ einfachen Mitteln zu lösen, daß für den manuellen Transport bzw. für die manuell allein durch menschliche Arbeitskraft bewirkte Bewegung von Trägerplatten oder Paletten eine flexible Transport- oder Montageeinrichtung geschaffen wird, die einfach aufgebaut ist, problemlos an Werkzeugmaschinen mit unterschiedlicher Tischhöhe angepaßt werden kann und sowohl einen einfachen manuellen Transfer der Paletten als auch die endgültige Ein richtung und Justierung einer solchen Palette beispielsweise auf dem Arbeitstisch einer zugeordneten Werkzeug- oder Bearbeitungsmaschine ohne größere Schwierigkeiten ermöglicht.

Vorteile der Erfindung

Die Erfindung löst diese Aufgabe mit den kennzeichnenden Merkmalen des Hauptanspruchs und hat den Vorteil, daß im Grunde ähnlich schnell und anstrengungsfrei wie bei automatischen Transportsystemen, die z. B. wegen unterschiedlicher Tischhöhe nicht immer einsetzbar sind, der Palettenumtausch sowie das Heranbringen und Wegführen der Paletten zu und von den Werkzeugmaschinen möglich ist, wobei von besonderem Vorteil ferner der Umstand ist, daß die Erfindung ein problemloses manuelles Verschieben der Paletten beispielsweise von einem vor jeder Werkzeugmaschine angeordneten Palettenpuffertisch bis zum Arbeitstisch der Werkzeugmaschine ermöglicht. Diese Arbeiten können von einer Bedienungsperson ohne größeren Aufwand und auch ohne erhöhten Krafteinsatz erbracht werden, weil die Paletten auf dem Palettenpuffertisch, auf einer Transferbrücke und auf dem Arbeitstisch der Werkzeugmaschine von speziellen Unterstützungsmitteln getragen sind, also auf den erwähnten Unterlagen nicht unmittelbar aufliegen. Die Unterstützungsmittel können eine Vielzahl von Kugelrollelementen sein, die in den Palettenpuffertisch und in den Arbeitstisch der Werkzeugmaschine eingelassen sind, so daß die Unterseite jeder durch ihren jeweiligen Werkstükkaufbau komplettierten, üblicherweise sehr schweren Palette von den einzelnen Kugelelementen nur punktweise berührt wird. Das macht ein problemloses Verschieben der einzelnen Paletten von Hand auch aus dem Stillstand möglich, weil kaum Reibung auftritt und daher eine einzelne Bedienungsperson jede Palette in beliebiger Richtung verschieben kann.

Eine weitere bevorzugte Ausführungsform der Unterstützungsmittel besteht darin, daß diese eine, wenn auch nur sehr dünne Luftzwischenschicht bilden oder aus einer solchen bestehen, so daß es nicht zu einer unmittelbaren Berührung der Palettenunterseite mit den Oberseiten von Palettenpuffertisch bzw. Arbeitstisch der Werkzeugmaschine kommen kann. Erzeugt werden kann eine solche sehr dünne, die Palette tragende Luftzwischenschicht durch eine geeignet ausgebildete Druckluftzufuhr, so daß, ähnlich wie dies bei den bekannten Luftbooten der Fall ist, die Paletten sich, allerdings nur geringfügig von der Unterlage abheben und dann natürlich, da keine Reibung mehr vorhanden ist, auch problemlos von Hand in beliebige Richtungen verschoben werden können. Dabei braucht die Bedienungsperson lediglich die Trägheitsmasse der Paletten zu überwinden.

Bei der tragenden Luftschicht sind dann wieder verschiedene Ausführungsformen denkbar; so kann man beispielsweise jede Palette auf ihrer Unterseite mit in entsprechende Muster verteilten Austrittsöffnungen für zugeführte Druckluft versehen, so daß die Palette sich von jeder dann verständlicherweise möglichst glattflächigen Unterlage abhebt und über dieser schwebt, solange die Druckluft zugeführt wird. Je nach der Höhe des Drucks der zugeführten Luft und der Art und Anordnung der Austrittsöffnungen kann sich dabei eine Palette bis zu mehreren Zehntel Millimetern schwebend über die Tischunterlage erheben.

Hier ist es aber auch möglich, die einzelnen Paletten unverändert zu belassen und an den Tischen entsprechende Druckluft-Austrittsöffnungen im jeweils erforderlichen gewünschten Muster anzuordnen, so daß es nicht notwendig ist, eine beispielsweise durch eine längere Schlauchverbindung mögliche transportable Druckluftquelle vorzusehen, da die Tische stationär an die Druckluft angeschlossen werden können - es sind stets die Paletten, die auf den Tischen verfahren und transportiert werden.

Die Erfindung eignet sich mit besonderem Vorzug sowohl für den Hin- und Abtransport von Paletten zu Bearbeitungsmaschinen, beispielsweise NC-Maschinen, also zur Beschickung der Bearbeitungsmaschinen oder zur Vervollständigung von Rüstplätzen, wenn diese an anderer Stelle angeordnet sind. So können beispielsweise mehrere Rüstplätze, die jeweils aus einem einzelnen Palettentisch bestehen, über die entsprechenden Transferbrückenverbindungen mit einem gemeinsamen Plattenpuffertisch verbunden werden, der dann seinerseits wieder über weitere Transferbrücken mit anderen Stellen oder Rüstplätzen oder auch direkt mit den Tischen von Bearbeitungsmaschinen verbunden ist.

Hierbei ist es auch möglich, zu einem vor jeder Werkzeugmaschine angeordneten Palettenpuffertisch, der die gleiche Höhe aufweist wie der jeweilige Werkzeugmaschinentisch, Paletten von einem beliebigen externen Palettentransportsystem heranzubringen bzw. wieder abzuholen. Dies kann ein Gabelstapler oder ein sonstiger verfahrbarer Wagen sein, bei dem, wie bei einem Gabelstapler, unterschiedliche Hubhöhen einstellbar sind, so daß von den unterschiedlichen Höhen der Palettenpuffertische abgearbeitete Paletten abgenommen und frische Paletten aufgelegt werden können, die beispielsweise vom Rüstplatz-Transfersystem stammen, wo dann wieder andere Höhen zulässig sind.

Vorteilhaft ist ferner, daß trotz der leichten manuellen Verschiebbarkeit der Paletten von der Bereitstellungsstation (Palettenpuffertisch) bis zur Positionierung auf dem Werkzeugmaschinentisch ein einwandfreier fester Sitz der Palette in der Bearbeitungsposition erreicht werden kann, indem nach dem endgültigen Zurechtrücken und Zentrieren der Palette auf dem Werkzeugmaschinentisch die Palette sozusagen auf den Tisch heruntergeschraubt werden kann, wobei im Falle einzelner tragender Kugelrollelemente diese federnd weggedrückt werden, bis die Palette selbst auf dem Arbeitstisch in normaler Position aufliegt oder im Falle einer Druckluftunterstützung deren Zufuhr abgeschaltet wird, so daß die Palette in der gewünschten Endposition auf dem Arbeitstisch zunächst mit Druckluftunterstützung hochpräzise zurechtgerückt und anschließend festgeschraubt werden kann.

Ein solches flexibles Transport- und Montagesystem für Paletten ist an beliebige Werkzeugmaschinen an paßbar, läßt sich kostengünstig und problemlos aufstellen und falls gewünscht auch wieder beiseite räumen und ermöglicht den Palettenwechsel mit mindestens der gleichen Geschwindigkeit, wie dies bei standardisierten Systemen mit automatisierten Palettentransportwägen ebenfalls möglich ist, weist jedoch nicht deren nachteilige Beschränkungen auf, also etwa das Erfordernis stets gleicher Arbeitstischhöhen.

Die Erfindung weist daher, zusammengefaßt, die folgenden Vorteile auf.

- Es ergibt sich ein einfaches, preiswertes und technisch problemloses System zur Lösung logistischer Bereitstellungs-Probleme an Werkzeugmaschinen;

- die Erfindung ermöglicht die Längsförderung, Querförderung, eine Eckumsetzung bzw. Pufferung sowie die leichte Justierung von Paletten auf dem Maschinentisch;

- der Materialfluß wird rationalisiert, Werkstücke können ohne Zeitverlust bereitgestellt und wieder abgeholt werden;

- dabei ist es möglich, die Bestückung der Paletten an einem separaten Rüstplatz vorzunehmen, wodurch ununterbrochene Bereitstellungsmöglichkeiten auch im Schichtbetrieb möglich sind;

- der Übernahmeplatz ist unabhängig von unterschiedlichen Maschinentischhöhen;

- bauliche Veränderungen in den jeweiligen Fertigungshallen sind nicht erforderlich, da- die Installation selbst auf engstem Raum möglich und bei Bedarf beliebig erweiterungsfähig ist;

- die Rüst- bzw. Einrichtzeiten an der Maschine werden pro Vorrichtungswechsel erheblich gesenkt, wobei

- das System sowohl für Maschinen mit als auch ohne Palettenwechsler geeignet ist.

Durch die in den Unteransprüchen aufgeführten Maßnahmen sind vorteilhafte Weiterbildungen und Verbesserungen der Erfindung möglich. Besonders vorteilhaft ist die Ausrüstung der Transferbrücke zwischen dem Palettenpuffertisch und dem Werkzeugmaschinentisch mit Kugellagern, die in der üblichen Weise aus einem Kugellagerinnenring und einem Kugellageraußenring mit einem dazwischen angeordneten Kugelkranz aufgebaut sind. Dabei wird der Kugellagerinnenring so an einzelnen Brückenträgern bzw. Holmen befestigt, daß sich der Außenring nur in der Transportrichtung vom Palettenpuffertisch zum Maschinenarbeitstisch und in Gegenrichtung bewegen kann, wodurch auch ein unbeabsichtigtes Abgleiten oder Schrägziehen von Paletten bei diesem Transfer ausgeschlossen wird. Sobald dann die Paletten wieder in den Bereich der jeweiligen Tische gelangen, sind beliebige Quer- und Längsverschiebungen sowie Drehungen der Palette, auch zur Feineinstellung auf dem Maschinenarbeitstisch, möglich.

Vorteilhaft ist ferner die Anordnung einer Umrandung immer bei solchen Tischen, bei denen durch eine praktisch reibungsfreie Unterstützung Verschiebungen in beliebige Richtungen möglich sind. Die Umrandung als seitliche Führung und Sicherung stellt sicher, daß die Palette von dem jeweiligen Tisch - üblicherweise wird es sich hierbei um den Palettenpuf fertisch oder auch um separate Rüstplatz-Tische handeln, nicht abrutschen kann, andererseits aber ein zuverlässiges Gleiten in der jeweils gewünschten Bewegungsrichtung möglich ist. Hierzu können die Innenseiten der seitlichen Führungsstege mit Kugellagern ausgerüstet sein, so daß ein Verkanten oder Verklemmen zuverlässig verhindert wird.

Zeichnung

Ausführungsbeispiele der Erfindung sind in der Zeichnung dargestellt und werden in der nachfolgenden Beschreibung näher erläutert. Es zeigen:

Fig. 1 grob schematisiert in Draufsicht eine an einen Werkzeugmaschinentisch angestellte Einheit aus Palettenpuffertisch und Transferbrücke;

Fig. 2 die perspektivische Seitendarstellung des über eine Transferbrücke mit dem Maschinenarbeitstisch verbundenen Palettenpuffertisches, wobei sich auf diesem eine frische Palette in Wartestellung und auf dem Maschinenarbeitstisch eine zu bearbeitende Palette befindet;

Fig. 3 im Teilausschnitt ein mögliches Ausführungsbeispiel eines bekannten Kugelrollen-Elements, wie es bei vorliegender Erfindung als erste Variante für ein Unterstützungsmittel Verwendung findet;

Fig. 4 zeigt eine zweite Ausführungsform eines über eine Transferbrücke mit einem Maschinenarbeitstisch verbundenen Palettenpuffertisches, wobei die der Palettenunterseite zugewandten Flächen von Palettenpuffertisch und Maschinenarbeitstisch glattflächig ohne eigene Unterstützungsmittel, jedoch mit allseitiger Führungsumrandung, die sich auch längs der Transferbrücke erstreckt, ausgerüstet sind, während die

Fig. 5 perspektivisch die Unterseite einer als Vorrichtungsspannplatte ausgebildeten Palette mit einer Druckluft-Zufuhreinrichtung für die Unterstützung zeigt;

Fig. 6 zeigt schließlich im Teilausschnitt eine mögliche Ausführungsform für eine Palettenunterseite bzw., entsprechend angewandt, auch für die Druckluftbeschickung von Palettenpuffertisch- und gegebenenfalls Maschinenarbeitstisch-Oberflächen dar.

Beschreibung der Ausführungsbeispiele

Entsprechend einem Grundgedanken vorliegender Erfindung wird auf die bisher bekannten, weitgehend automatisierten Palettentransport- und -übergabesysteme verzichtet, die nicht in allen Fällen eingesetzt werden können und es wird ein Transfersystem geschaffen, welches bei besonders einfachem und kostengünstigem Aufbau den logistischen Ablauf der Arbeitsvorbereitung über einen separaten Rüstplatz bis zur Beschickung zur Bearbeitungsmaschine beherrscht, wobei selbst schwerste Werkstücke manuell zentriert und auf eine gewünschte Fixposition gebracht werden können. Dabei ist jeweils einem Palettenpuffertisch ein Arbeitstisch über eine Transferbrücke zugeordnet - der Arbeitstisch kann ein Maschinenarbeitstisch oder ein Rüstplatztisch sein, wobei beliebige Ergänzungen in beliebiger Richtung, jeweils über entsprechende Transferbrücken möglich sind. Die Transferbrücken bestehen in ihrer einfachsten und bevorzugten Ausführungsform aus sowohl am Palettenpuffertisch als auch an dem jeweiligen Arbeitstisch befestigte, jedoch beliebig umsetzbare Holme, wobei jeweils zwei Holme eine Transferbrücke bilden und mit Kugellagern bestückt sicherstellen, daß die manuelle Verschiebung auch über die Transferbrücken problemlos möglich ist.

Sämtliche anderen in diesem Zusammenhang auftretenden Flächen, auf denen Paletten lagern oder verschoben werden, verfügen dann über Unterstützungsmittel, die entweder Kugelrollelemente sind oder die von der Palette selbst ausgehend oder von den jeweiligen Flächen eine in geeigneter Weise realisierte Druckluftzufuhr ausnutzen, um ein ebenso leichtes, anstrengungsfreies Verschieben der Paletten zu ermöglichen.

Hierdurch ist es dann möglich, ohne den normalerweise sehr kostspieligen und umständlichen Einsatz von Palettenwechselsystemen lediglich durch manuelle Krafteinwirkung einer Bedienungsperson Paletten von einem Bereitstellungstisch, also dem Palettenpuffertisch auf die Arbeitsfläche der Werkzeugmaschine zu bringen, in der gewünschten Präzisionsposition festzusetzen, nach Bearbeitung wieder abzunehmen, auf dem Puffertisch zu verschieben und diesen als einem weiterführenden Transportmittel zugewandtes Element zu behandeln. Ein solches weiterführendes Transportmittel kann dann ein beliebiger, in seiner Hubhöhe verstellbarer Wagen sein, der in der Lage ist, von den in unterschiedlicher Höhe angeordneten Palettenpuffertischen gebrauchte Paletten abzuführen und frische Paletten aufzusetzen; es kann sich aber auch im einfachsten und praktischsten Fall um einen Gabelstapler oder ein ähnliches Transportfahrzeug handeln. Ein entsprechender Transfer ist unter Zugrundelegung der gleichen Elemente auch bei an anderer Stelle eingerichteten Rüstplätzen möglich, die dann jeweils aus separaten Werkbanktischen bestehen, die die Rüstplätze bilden und die über entsprechende Transferbrücken mit einem eine entsprechend gewünschte Anzahl von Palettenplätzen aufweisenden Palettenpuffertisch verbunden sind.

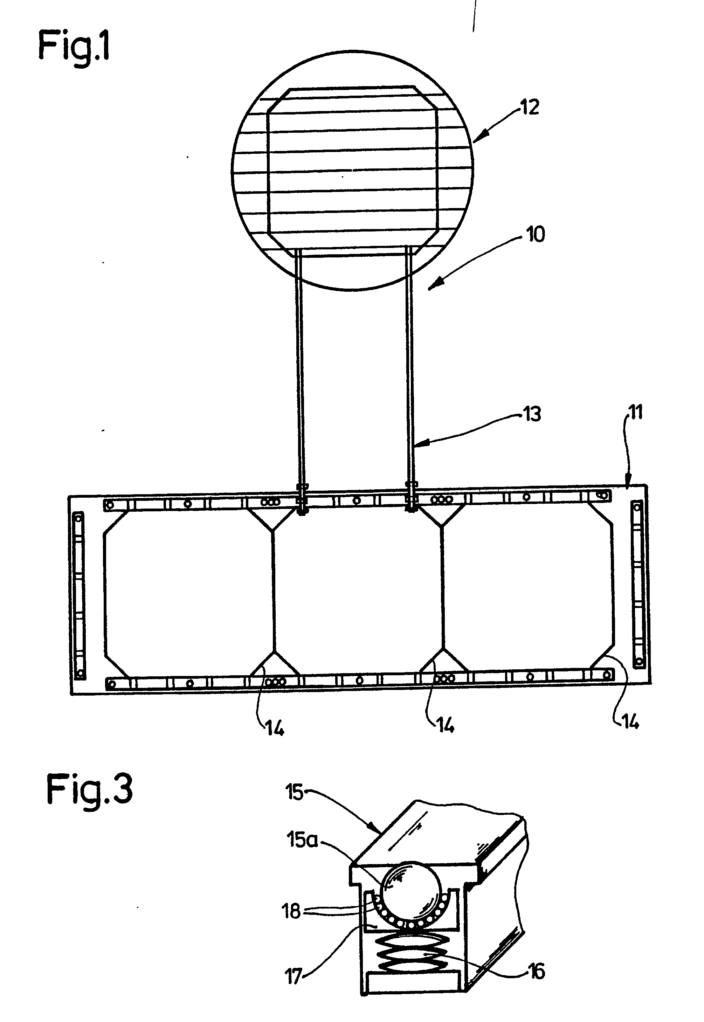

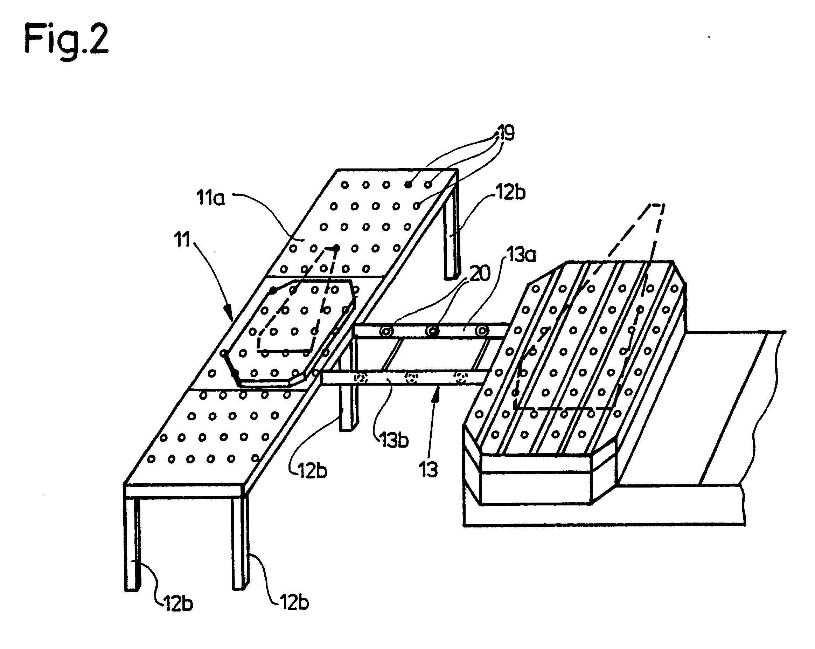

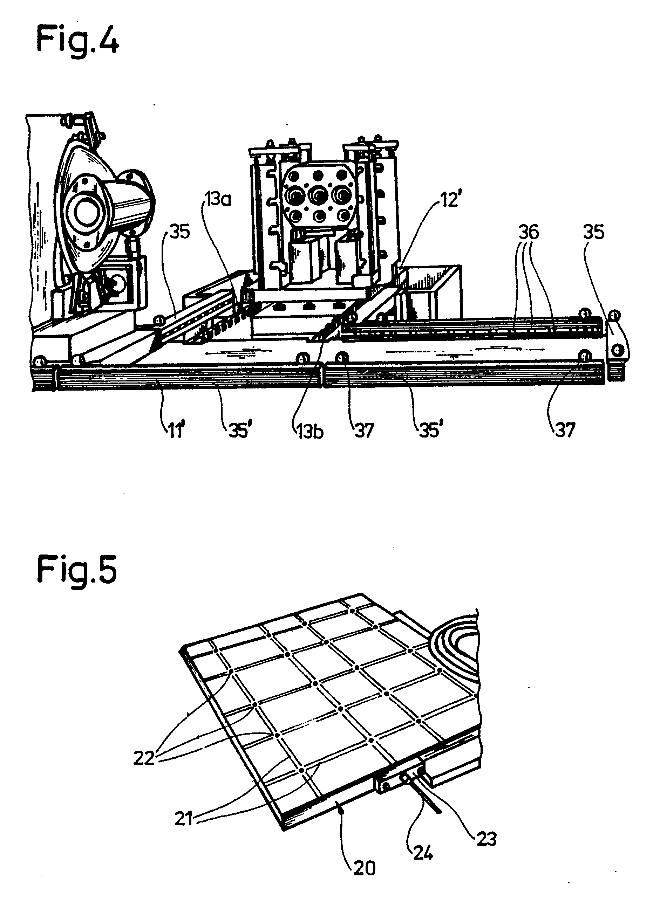

Das in den Figuren 1, 2 und 3 dargestellte Palettentransport- und Montagesystem 10 umfaßt als Unterstützungsmittel für die auf dem Palettenpuffertisch bzw. dem Rüstplatz-Arbeitstisch oder dem Werkzeugmaschinen-Arbeitstisch aufliegenden oder transportierten Paletten Kugelrollelemente - die in den Figuren 4-6 gezeigten Ausführungsformen benutzen als Unterstützungsmittel Druckluftbeeinrichtungen.

Das Palettentransfersystem 10 der Fig. 1 umfaßt einen Palettenpuffertisch 11 und einen Werkzeugmaschinenarbeitstisch 12, wobei diese beiden Teile über eine Brückenkonstruktion verbunden sind, die im folgenden als Transferbrücke 13 bezeichnet wird, und aus zwei Hauptholmen oder Trägern 13a und 13b besteht.

Der Palettenpuffertisch 11 kann von beliebigem Aufbau sein und umfaßt, wie bei Tischen üblich, eine ausgedehnte Arbeitsplatte 11a, die sich durch eine größere Anzahl von Tischbeinen 12b am Fußboden der Maschinenhalle abstützt. Dabei ist allerdings darauf geachtet, daß sich hierdurch eine Tischhöhe für den Palettenpuffertisch ergibt, die der Arbeitstischhöhe der zugeordneten Werkzeugmaschine bzw. des zugeordneten Rüstplatz-Arbeitstisches entspricht, so daß eine Bedienungsperson eine Palette von einem dieser Tische auf den anderen über die Transferbrücke 13 hin und her schieben kann, ohne daß hierbei ein Gefälle überwunden werden muß, welches einem solchen Transport hinderlich wäre bzw. diesen unmöglich machen würde.

Bei dem in der Zeichnung dargestellten Palettenpuffertisch 11 ist die Tischlänge in Querrichtung vor der Werkzeugmaschine, also quer zu der Transportrichtung, die sich ergibt, wenn die Palette über die Transferbrücke 13 verschoben wird, so bemessen, daß Platz ist für drei Paletten, Werkstückspanntische oder Spannplatten, wobei diese drei Plätze in Fig. 1 mit dem Bezugszeichen 14 bezeichnet sind.

Die Oberfläche des Palettenpuffertisches dort, wo auf diesem Spannplatten für Werkstücke oder Paletten abgelegt werden, ist mit beliebigen, eine Rollreibung beim Verschieben der Paletten ermöglichenden Trageelementen bestückt, die für sich gesehen bekannt sind und von denen ein mögliches Ausführungsbeispiel in Fig. 13 dargestellt und mit 15 bezeichnet ist.

Diese im folgenden als Kugelrollelemente bezeichneten, zwischen den jeweiligen Tisch- und Transferbrückenoberflächen und den Unterflächen der aufgelegten Paletten wirksamen Trage- oder Unterstützungsmittel sind so in die Oberflächen der beiden Tische eingelassen, daß sich die Kugeln mit ihrer obersten Spitzenkrümmung um einen geringen vorgegebenen Betrag, beispielsweise ca. 1 mm, über die Tischoberfläche erstrecken.

Ferner ist jedes Kugelrollelement so ausgebildet, daß die Unterstützungskugel 15a (Fig. 3) mit vergleichsweise starker Federkraft nach oben gedrückt wird, wobei beispielsweise Tellerfedern 16 vorgesehen sein können, die ein Käfigteil 17 nach oben drücken, welches die Unterstützungskugel 15a über weitere kleine, eine Rollreibung auch in diesem Bereich ermöglichende Zwischenkugeln 18 lagert.

Die Kugelrollelemente können jeweils als Einzelelemente ausgebildet sein, d. h. daß immer eine Unterstützungskugel 15a in einem entsprechenden Gehäuseteil gelagert ist, welches dann, wie in Fig. 3 bei 19 angedeutet, in an sich beliebiger Verteilung und beliebigem Muster in die Tischoberfläche eingelassen ist.

Es ist aber auch möglich, daß die Kugelrollelemente die Form einer sich in Längsrichtung erstreckenden einstückigen Leiste aufweisen, wobei die eine vorgegebene Länge aufweisende Leiste eine größere Anzahl von einzelnen Unterstützungskugeln 15a in der üblichen federvorgespannten und gleitkugelunterstützten Fassung lagert.

Sind daher die Palettenpuffertische bevorzugt mit Kugelroll-Einzelelementen ausgestattet, so ist es empfehlenswert, in die ohnehin bei jedem Maschinenarbeitstisch vorhandenen T-Nuten solche Längsträger mit jeweils mehreren Kugelrollelementen einzulegen, wie dies in Fig. 3 angedeutet ist.

Eine unterschiedliche Art der Rollreibung ist für die Transferbrücke 13 vorgesehen; diese besteht im einfachsten Fall aus zwei im vorgegebenen Abstand zueinander angeordneten Trägern 13a, 13b etwa von der mittleren Auflage des Palettenpuffertisches 11 hinüberreichend zum Werkzeugmaschinenarbeitstisch und in entsprechender Weise mit beiden Tischen verbunden. Hier sind für den leichten Übergabetransport der Paletten an den Trägern 13a, 13b - diese können durch beliebige Querträger noch miteinander versteift sein - übliche Kugellager vorgesehen, die also jeweils einen Innenring oder einen Außenring mit dazwischenliegendem Kugelkranz aufweisen. Der Innenring jedes Kugellagers ist dann in einer solchen Höhe an den Trägern 13a, 13b befestigt, daß sich die Außenringe um einen geringfügigen Abstand über die Trägeroberfläche erstrecken, wobei sie sich in der Transportrichtung zwischen dem Maschinenarbeitstisch und dem Palettenpuffertisch leicht drehen und dafür sorgen, daß die von den Tischen abgleitenden Paletten auf die Kugellageraußenkränze der Transferbrücke übergleiten und von diesen dann strikt lediglich in der zulässigen Bewegungsrichtung zum jeweils anderen Tisch befördert und bei allmählichem Übergleiten von den diesem zugeordneten Kugelrollelementen übernommen werden.

Alle diese Palettenbewegungen können von nur einer Bedienungsperson ohne größeren Kraftaufwand realisiert werden, wobei sich ein üblicher Arbeitsablauf so darstellt, daß bei einer angenommenen, sich in Bearbeitung befindlichen Palette auf dem Werkzeugmaschinentisch eine frische Palette auf dem Palettenpuffertisch, etwa in der rechten oder linken Position befindet. Ist dann die sich am Maschinentisch befindliche Palette abgearbeitet, dann löst die Bedienungsperson eine fixierende Verriegelung - hierauf wird weiter unten gleich noch eingegangen - und die dann frei bewegliche, abgearbeitete Palette wird vom Maschinentisch auf die Transferbrücke und von dieser im Übergang auf die mittlere Palettenpuffertischposition verschoben. Von dieser Position erfolgt eine weitere Verschiebung in Querrichtung auf den einen freien Platz auf dem Palettenpuffertisch, so daß dessen mittlere Position frei wird. Auf diese wird dann die sich ebenfalls auf dem Palettenpuffertisch befindliche frische Palette verschoben, gelangt dann durch Bewegungsumkehrung um 90° über die Transferbrücke auf den Maschinenarbeitstisch. Dort angekommen erfolgt eine hochgenaue Ausrichtung in die Zentrierposition, was durch die auch dort wirksame Rollreibung mit nur einer bedienungsperson problemlos möglich ist. Sobald dann die gewünschte Position erreicht ist, beispielsweise Palettenzentrierbohrungen auf Indexierbohrungen am Maschinentisch ausgerichtet sind, werden Befestigungsschrauben eingesetzt und die Spannplatte oder die Palette wird auf dem Maschinentisch nach unten geschraubt, wodurch die bisher hervorragenden Unterstützungskugeln 15a in ihre federnde Lagerung einge drückt werden, also von der Arbeitstischoberfläche verschwinden und die Palette mit ihrer ganzen Fläche sicher auf dem Maschinentisch aufliegt und durch die Befestigungsschrauben gehalten ist.

Sobald die Befestigungsschrauben dann wieder freigegeben werden, heben die Unterstützungskugeln 15a die Palette am Maschinentisch wieder an, und zwar aufgrund ihrer Federvorspannung, so daß der einfache Abtransport, wie weiter vorn schon erwähnt, erfolgen kann.

In der Zwischenzeit hat ein anderweitiges Transportsystem, welches nicht in den engeren Bereich der soeben geschilderten Ausführungsform gehört, Gelegenheit, auf eine der freien Stellen auf dem Palettentisch eine frische Palette abzulegen und dann im gleichen Arbeitsablauf die sich auf diesem befindliche abgearbeitete Palette aufzunehmen und zum Umbauen oder zur Neubestückung an einen Voreinstellplatz zu transportieren.

Ein weiteres bevorzugtes Ausführungsbeispiel vorliegender Erfindung, welches in den Figuren 4-6 dargestellt ist, verwendet als Unterstützungsmittel für die auf dem Palettenpuffertisch bzw. auf dem Arbeitstisch liegenden und dort zu bewegenden Paletten ein Luftpolster zwischen den aneinandergrenzenden Flächen, so daß die Palettenunterseite von der zugewandten Tischfläche abgehoben ist und die Palette sozusagen, wenn auch nur einige Zehntel Millimeter, schwebend gehalten ist. Dies gilt für sämtliche Tische, auf denen die Palette aufliegt bzw. befördert und verschoben wird, also den Palettenpuffertisch, einen an diesen angeschlossenen Rüstplatz-Arbeitstisch oder den Maschinen-Arbeitstisch, mit Ausnahme der Transferbrücke, die für den Übergabetransport der Paletten grundsätzlich auf derschon erläuterten Kugellager-Rollreibung beruht.

Für die reibungsfreie Luftdruck-Unterstützung der Paletten auf den Tischen sind wiederum zwei Varianten möglich, nämlich eine erste Ausführungsform, bei der entsprechend der Darstellung der Fig. 5 jede Palette 20 über ein eigenes Luftleit- und -auslaßsystem verfügt. Die Fig. 5 zeigt eine solchermaßen ausgerüstete Palette von der Unterseite; man erkennt in der Draufsicht kreuz und quer über die Palette verlaufende, nach dem Einbringen beispielsweise von die Druckluft transportierenden Schläudchen wieder verschlossene Kanäle 21, wobei in verteilten Abständen Luftauslaßstellen 22 längs jedes Kanals eingerichtet sind, aus denen die an einem geeigneten Anschlußadapter 23 zugeführte Druckluft 24 wieder austritt.

Da die Paletten also über eine eigene Druckluftversorgung verfügen, jedoch transportabel sein müssen, ist es in diesem Falle erforderlich, die Druckluftzufuhr über eine geeignete längere und flexible Schlauchverbindung anzuschließen, mit ensprechenden Verbindungskupplungen, damit die Paletten auch verschoben und transportiert werden können. Auf Art und Aufbau der Luftaustrittsöffnungen 22 wird weiter unten noch genauer eingegangen.

Verfügen die Paletten für ihren Transport über Luftaustrittsöffnungen, so daß sie auf einem von ihnen selbst erzeugten Luftpolster schweben, dann ist es erforderlich, daß die Gegenflächen der Tische plan und eben sind, wie dies in Fig. 4 mit Bezug auf den dort gezeigten Palettenpuffertisch 11' bzw. den Maschinenarbeitstisch 12' der Fall ist. In Fig. 4 ist im übrigen zur besseren Übersichtlichkeit die Bearbeitungsmaschine nicht dargestellt. Aus dieser Figur wird im übrigen eine weitere vorteilhafte Ausgestaltung der Erfindung deutlich, die darin besteht, daß sowohl die Palettenpuffertische als auch die Rüstplatz-Arbeitstische nicht notwendigerweise aus Metall hergestellt zu werden brauchen, sondern hier bevorzugt ein Holzverbundwerkstoff eingesetzt wird, der beispielsweise aus schichtverleimtem Sperrholz geeigneter Dicke bestehen kann. Im Falle der Luftdruck-Ausrüstung der Paletten oder Spannplatten selbst - Fig. 5 zeigt im übrigen eine im Vorrichtungsbau für sich gesehen bevorzugte Spannplatte, wie sie beispielsweise in dem deutschen Patent 25 57 701 ausführlich beschrieben ist - können für die Tischflächen mit Metalloberflächen versehene Holzkernplatten verwendet werden, insbesondere mit Stahlblech beschichtete Holzschichtplatten, wie sie beispielsweise für sich gesehen unter der Bezeichnung Inmetal-Elemente als Verbundelemente bekannt und in einem gleichlautenden Prospekt der Firma Blomberger Holzindustrie, 4933 Blomberg/Lippe, beschrieben sind.

Die zweite Variante des Druckluft-Schwebesystems für Paletten oder Spannplatten besteht darin, daß die der Spannplatte zugewandten Tischoberflächen mit den entsprechenden Luftaustrittsöffnungen in der gewünschten Verteilung bestückt sind, was auch bei entsprechend ausgebildeten Maschinen-Arbeitstischen möglich ist. Es versteht sich im übrigen, daß hier auch beliebige Mischformen möglich sind; so kann eine über ein eigenes Luftdruckzuführsystem verfügende Palette auf einem glatten Palettenpuffertisch oder Arbeitstisch ohne Luftaustrittsöffnungen durch ihre eigene Luftdruckzufuhr gehalten sein; sie gleitet dann über die Kugellagerführungen der Transferbrücke auf den Arbeitstisch, wo sich entweder die weiter vorn schon erläuterten Kugelrollelemente in den T-Nuten des Maschinenarbeitstisches befinden oder auf welchem die Palette selbst wieder ihr eigenes Luftdruckhebesystem einsetzt.

Es ist auch denkbar, daß Paletten oder Spannplatten ohne eigenes Luftdruckhebesystem auf den Tischoberflächen des Palettenpuffertisches oder eines Rüstplatz-Arbeitstisches mittels eines tischeigenen Luftdruckhebesystems transportiert und bewegt werden können; sie gleiten über die Transferbrücke stets auf deren Kugellagern und setzen dann im Bereich des Maschinenarbeitstisches entweder ein eigenes Luftdruckhebesystem ein oder gleiten wieder auf den weiter vorn schon erwähnten Kugelrollelementen.

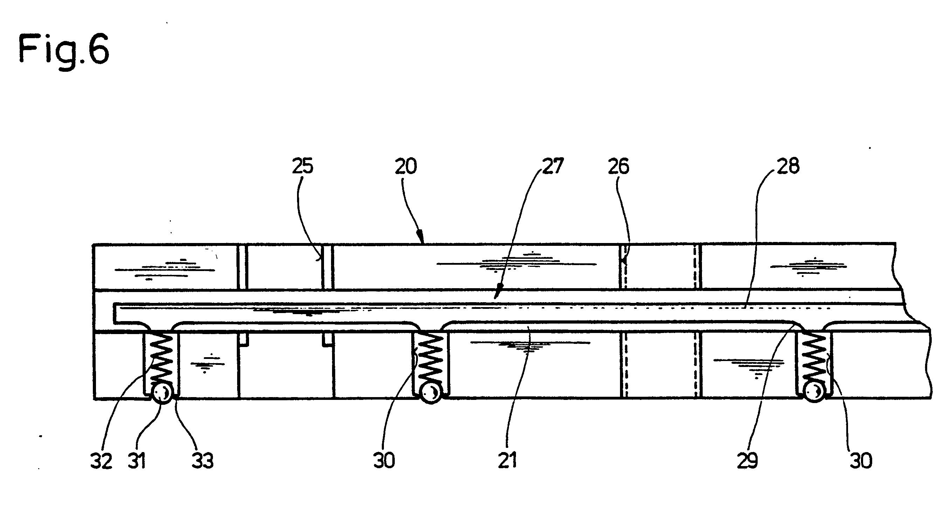

Da nicht auszuschließen ist, daß bei einfachen Luftaustrittsöffnungen in den jeweiligen Tisch- oder Palettenflächen die diesen jeweils gegenüberliegenden Flächen auch Bohrungen oder Ausnehmungen aufweisen können, so daß Druckluft ohne Unterstützungswirkung verloren geht, sind die Austrittsöffnungen bei sämtlichen denkbaren Luftdruckhebesystemen, ob paletteneigene oder tischstationäre Systeme eingesetzt werden, ventilgesichert ausgebildet, wie dies in Fig. 6 anhand einer Ausschnittdarstellung speziell für eine Palettenunterseite gezeigt ist.

Die dort dargestellte Palette 20 weist neben den durch Einsatzbuchsen in ihrer Position hochpräzise positionierten Paßbohrungen 25 sowie mit Innengewinde versehenen Spannbohrungen 26 ein Kanalsystem 27 auf, welches aus den weiter vorn schon erwähnten Längs- und Querkanälen 21 besteht, die beispielsweise von der Unterseite offen in die Platte eingefräst sein können. Anschließend legt man in die so gebildeten, zunächst noch offenen Kanäle für die Luftdruckverteilung geeignete Schläuche 28 ein, die sich bei 29 jeweils in zur Palettenunterseite (oder der Tischoberfläche) öffnende Querbohrungen 30 öffnen. Die Kanäle werden dann durch geeignete harte oder aushärtbare (Kunststoff)Füllmassen oder flüssiges Metall wieder, insbesondere randseitig und nach oben, verschlossen.

In diesen Querbohrungen 30, die der Aufleitung der zugeführten Druckluft zwischen die jeweiligen Flächen von Palette und Tisch dienen, sitzen Ventilkugeln 31, die unter Federvorspannung durch eine Feder 32 nach außen gedrückt werden, so daß die kugelige Oberfläche jeder Ventilkugel zur Anlage an einen von der Bohrung 30 gebildeten Sitz 33 kommt, der beispielsweise durch eine mit der Bohrung einstückige Verengung gebildet sein kann. Jedenfalls ist der Sitz 33 so bemessen, daß die Kugel mit ihrer äußersten Kugelrundspitze etwas über die plane Fläche (also Palettenunterseite oder die Oberfläche des Tisches)hinausragt, so daß dann, wenn die entsprechende Palette auf der glatten Oberfläche eines sie tragenden Tisches aufliegt, die Kugeln entgegen ihrer Federvorspannung von ihrem Sitz etwas abgehoben nach innen in die Bohrung 30 zurückgedrückt werden, wodurch sich um das Rund der Kugeln herum eine beispielsweise kreisförmige Schlitzöffnung bildet, durch die die Druckluft dann austreten kann. Befindet sich eine solche Austrittsöffnung andererseits einer Bohrung oder einer sonstigen Vertiefung gegenüber, dann drückt die Kugel, auch durch den Luftdruck unterstützt, auf ihren Sitz und dichtet diese Austrittsstelle ab. Es versteht sich, daß der insoweit geschilderte Ventilmechanismus für die Luftaustrittsöffnungen sinngemäß auch auf entsprechende Tischoberflächen mit Austrittsöffnungen für ein Luftdruckhebesystem angewendet werden kann.

Eine weitere vorteilhafte Ausgestaltung vorliegender Erfindung, die für alle Ausführungsformen geeignet ist und sowohl beim Palettenpuffertisch als auch bei den Maschinen-Arbeitstischen und Rüstplatz-Arbeitstischen als auch bei der Transferbrücke angewendet werden kann, ist aus der Darstellung der Fig. 4 zu erkennen und umfaßt seitliche Führungen zur Sicherung der Palettenposition, die insbesondere dann wirksam werden, wenn auf den Tischen die Paletten, angehoben durch das Luftdruckhebesystem oder durch die Kugelrollelemente in jeder Richtung frei und mit geringem Kraftaufwand verschoben werden können. In diesem Fall sorgen die seitlichen Führungen dafür, daß die Paletten nicht abrutschen, wobei die Führungen bevorzugt aus einzelnen Führungsstegen - Querstege 35 und Längs stege 35' bestehen können, die an den Tischrändern aufgesetzt sind und eine leistenförmige Form haben. Die Führungsstege 35, 35' verfügen über geeignete Lageranordnungen für Kugellager 36, so daß deren Außenringe über die Stege hinaus nach innen auf den Tisch gerichtet sind, den sie jeweils umrahmen. Diese auf den Innenseiten der Führungsstege angeordneten Kugellager sorgen für ein zuverlässiges Gleiten in der gewünschten Bewegungsrichtung, wenn eine Palette an die Kugellageraußenringe 36 zur Anlage kommt. Die Führungsstege 35, 35' können von den Tischoberflächenrändern abgenommen werden, damit beispielsweise ein Gabelstapler oder ein sonstiges Gerät auf der Tischoberfläche Paletten ablegen bzw. von dieser abnehmen kann. Zu diesem Zweck weisen die Enden der Führungsstege jeweils bei dem dargestellten Ausführungsbeispiel kugelförmige Handgriffe 37 auf, die in Zapfen enden, die durch fluchtende Bohrungen in den Führungsstegenenden und der zugehörigen Tischplatte geschoben sind.

Um ganz sicherzugehen, ist es auch möglich, solche Führungsstege parallel zu den Trägern 13a, 13b von verbindenden Transferbrücken anzuordnen, so daß auch bei unachtsamer Betätigung ein Querabrutschen von Paletten auf den Transferbrücken nicht möglich ist.

Versuche haben ergeben, daß die Luftdruckhebesysteme auch schwere und schwerste Paletten problemlos über der jeweiligen Tischoberfläche halten, wobei sich Luftdrücke, die im Bereich von etwa 6 bar liegen, als ausreichend erwiesen haben. Es versteht sich natürlich, daß diese numerische Angabe für die Erfindung nicht einschränkend zu verstehen ist.

Daher können alle in der Beschreibung, den Ansprüchen und der Zeichnung dargestellten Merkmale sowohl einzeln für sich als auch in beliebiger Kombination miteinander erfindungswesentlich sein.

**Ansprüche**

1. Manuell betätigbare, flexible Transport- oder Montageeinrichtung für (zu bearbeitende) Werkstücke tragende Paletten, Spannplatten u. dgl., für den Vorrichtungsbau, die Zuführung und Abnahme bestückter Paletten zu Maschinentischen u. dgl., gekennzeichnet durch

a) mindestens einen, mehrere Palettenplätze aufweisenden Palettenpuffertisch (11);

b) mindestens einen zugeordneten Arbeitstisch (12, 12');

c) mindestens eine Transferbrücke (13) zwischen Palettenpuffertisch (11) und Arbeitstisch, die zur manuellen Verschiebung der Paletten (20) eine Rollreibung ermöglichende stationäre Trageelemente aufweist, die so ausgebildet sind, daß sie eine Palettenbewegung ausschließlich in der Transferbrückenlängsrichtung ermöglichen sowie

d) durch eine die Paletten im aktivierten Zustand zur manuellen Verschiebung in beliebige Richtungen über die jeweilige Tischoberfläche anhebende Unterstützungseinrichtung im Bereich des Palettenpuffertisches und des Arbeitstisches.

2. Manuell betätigbare, flexible Transport- oder Montageeinrichtung nach Anspruch 1, dadurch gekennzeichnet, daß der Arbeitstisch ein einer Bearbeitungsmaschine zugeordneter Maschinen-Arbeitstisch ist.

3. Manuell betätigbare, flexible Transport- oder Montageeinrichtung nach Anspruch 1, dadurch gekennzeichnet, daß der Arbeitstisch ein Rüstplatz-Arbeitstisch im Bereich einer Rüstplatzeinrichtung ist.

4. Manuell betätigbare, flexible Transport- oder Montageeinrichtung nach einem der Ansprüche 1-3, dadurch gekennzeichnet, daß die Transferbrücke (13) aus mindestens zwei den Abstand zwischen dem jeweiligen Palettenpuffertisch und dem Maschinenarbeitstisch überbrückenden, zueinander mit vorgegebenem Abstand angeordneten Trägern (13a, 13b) besteht, an denen Kugellager (20) in einer solchen Höhe durch Fixierung von deren Innenringen befestigt sind, daß von den jeweiligen Tischen über die Transferbrücke geschobene Paletten auf den Außenringen der Kugellager in der hierdurch freigegebenen Bewegungsrichtung gleiten.

5. Manuell betätigbare, flexible Transport- oder Montageeinrichtung nach einem der Ansprüche 1-4, dadurch gekennzeichnet, daß die Höhe des vor einer Werkzeugmaschine stehenden Palettenpuffertisches (11) der Werkzeugmaschinen-Tischhöhe entspricht derart, daß die beide Tische verbindende Transferbrücke (13) mit ihren Trägern (13a, 13b) horizontal verläuft.

6. Manuell betätigbare, flexible Transport- oder Montageeinrichtung nach Anspruch 1, dadurch gekennzeichnet, daß die eine manuellen Verschiebung der Paletten auf den Tischen (Palettenpuffertisch 11; Maschinenarbeitstisch 12, 12'; Rüstplatz-Arbeitstisch) ermöglichende Unterstützungseinrichtung aus einer Vielzahl von Kugelrollelementen (15) besteht, die in die Tischoberfläche so eingelassen sind, daß sie unter Federdruck mit einer oberen Kugelrundung über die Tischoberfläche hinausstehen und jeweils aufgelegte Paletten mittels Rollreibung zur leichten Verschiebung tragen.

7. Manuell betätigbare, flexible Transport- oder Montageeinrichtung nach Anspruch 6, dadurch gekennzeichnet, daß die Federvorspannung der Kugelrollelemente im Bereich des Maschinenarbeitstisches (12) so bemessen ist, daß ein Zurechtrücken der jeweils übernommenen Palette möglich ist mit anschließendem Niederschrauben der Palette bei gleichzeitigem Zurückdrücken der Kugeln gegen ihre Federvorspannung.

8. Manuell betätigbare, flexible Transport- oder Montageeinrichtung nach Anspruch 1, dadurch gekennzeichnet, daß die eine leichte manuelle Verschiebung ermöglichende Unterstützungseinrichtung zwischen dem jeweiligen Tisch und der Paletten- ober Spannplatten-Unterseite eine Luftdruckhebeeinrichtung ist, bestehend aus einer Vielzahl von Luft unter hohem Druck zwischen die beiden Flächen einleitende Öffnungen derart, daß die Palette oder Spannplatte über der Tischoberfläche im geringfügigen Abstand schwebend gehalten ist.

9. Manuell betätigbare, flexible Transport- oder Montageeinrichtung nach Anspruch 8, dadurch gekennzeichnet, daß die Druckluft einleitenden Öffnungen auf der Unterseite der jeweiligen Palette oder Spannplatte (20) gebildet sind, mit einer flexiblen Druckluftzuführung zur beweglich gelagerten Spannplatte (20) oder Palette.

10. Manuell betätigbare, flexible Transport- oder Montageeinrichtung nach Anspruch 8, dadurch gekennzeichnet, daß die Druckluft-Austrittsöffnungen (21) zwischen den einander gegenüberliegenden Flächen von Spannplatte oder Palette einerseits und Tischoberfläche andererseits in der jeweiligen Tischoberfläche in entsprechender Verteilung gebildet sind.

11. Manuell betätigbare, flexible Transport- oder Montageeinrichtung nach einem der Ansprüche 8-10, dadurch gekennzeichnet, daß die Luftaustrittsöffnungen ventilverriegelt sind derart, daß bei einer der jeweiligen Luftaustrittsöffnung (22) gegenüberliegenden Ausnehmung oder Bohrung die Luftaustrittsöffnung automatisch hermetisch verschlossen ist.

12. Manuell betätigbare, flexible Transport- oder Montageeinrichtung nach Anspruch 11, dadurch gekennzeichnet, daß die Luftaustrittsöffnungen an der Unterseite der Spannplatte oder Palette bzw. an der Oberfläche der jeweiligen Tische (Palettenpuffertisch, Maschinen-Arbeitstisch, Rüstplatz-Arbeitstisch) durch Kugelventile verschlossen sind, die unter Federvorspannung auf einen Sitz drücken und die dann geöffnet sind, wenn die jeweils gegenüberliegende glatte Oberfläche die über ihre Umgebung überstehenden äußeren Kugelrundungen der Ventilkugeln eindrückt und hierdurch die Ventilkugeln von ihrem Sitz nach innen abhebt und den Weg der Druckluft zwischen die beiden sich gegenüberliegenden Oberflächen aus entsprechenden Quer- und Längskanälen sowie Zuflußbohrungen freigibt.

13. Manuell betätigbare, flexible Transport- oder Montageeinrichtung nach Anspruch 1, dadurch gekennzeichnet, daß der vor der zugeordneten Werkzeugmaschine stehende Palettenpuffertisch in senkrecht zur Übergaberichtung durch die Transferbrücke verlaufender Querrichtung Raum für die Anordnung von drei Palettenlagerplätzen (14) aufweist.

14. Manuell betätigbare, flexible Transport- oder Montageeinrichtung nach Anspruch 6, dadurch gekennzeichnet, daß die für sich gesehen bekannten Kugelroll-Elemente (15) in Einzelelement- oder in Längsträgerform so und in einer solchen Anzahl in die Oberflächen von Palettenpuffertisch (11) und Maschinenarbeitstisch (12) eingearbeitet sind, daß aufgelegte Paletten durch die auf die Unterstützungskugel (15a) einwirkende Federwirkung angehoben und getragen sind zur Durchführung beliebiger Längs-, Quer- und Drehbewegungen der Paletten.

15. Manuell betätigbare, flexible Transport- oder Montageeinrichtung nach einem der Ansprüche 6, 7 oder 11, dadurch gekennzeichnet, daß in die im Maschinenarbeitstisch vorgesehenen T-Nuten Kugelrollelemente enthaltende Längsträger eingesetzt sind und daß jede Palette Zentrierbohrungen und die Maschinenarbeitstische Indexierbohrungen aufweisen zur hochgenauen Positionierung mit anschließendem Niederschrauben der auf dem Maschinenarbeitstisch aufgelegten Palette mittels Befestigungsschrauben gegen den Federdruck der Kugelrollelemente bis zur gegenseitigen vollflächigen Auflage.

16. Manuell betätigbare, flexible Transport- oder Montageeinrichtung nach einem der Ansprüche 1-15, dadurch gekennzeichnet, daß jeder Arbeitstisch (Palettenpuffertisch 11, Maschinenarbeitstisch 12, 12', Rüstplatz-Arbeitstisch) sowie die Träger (13a, 13b) der Transferbrücke (13) seitlich bzw. in ihren Randbereichen abnehmbare Führungsstege (35, 35') aufweisen, die auf ihren Innenseiten Kugellager oder Kugelrollelemente aufweisen zur Vermeidung eines Abgleitens von aufgelegten Paletten oder Spannplatten und zur Ermöglichung einer zuverlässigen Gleitbewegung in der gewünschten Bewegungsrichtung.

17. Manuell betätigbare, flexible Transport- oder Montageeinrichtung nach einem der Ansprüche 1-16, dadurch gekennzeichnet, daß als Material für die Arbeitstische (Palettenpuffertisch; Rüstplatz-Arbeitstisch) Holzverbundelemente, gegebenenfalls mit Stahlblechbeschichtung vorgesehen sind.

## Fig.1

## Fig.3

Fig.2

# Fig.4

# Fig.5

Fig.6

European Patent
Office

**EUROPEAN SEARCH REPORT**

Application number

## DOCUMENTS CONSIDERED TO BE RELEVANT

EP 90103397.7

| Category | Citation of document with indication, where appropriate, of relevant passages | Relevant to claim | CLASSIFICATION OF THE APPLICATION (Int. Cl.⁵) |
|---|---|---|---|
| A | <u>US - A - 4 715 490</u><br>(DATE et al.)<br>   \* Gesamt \*<br>     -- | 1 | B 65 G 49/00<br>B 65 G 37/00 |
| A | <u>DE - A1 - 3 241 363</u><br>(KEARNEY & TRECKER CORP.)<br>   \* Gesamt; insbesondere<br>    Anspruch 5 \*<br>     -- | 1,8 | |
| A | <u>DE - C1 - 3 521 285</u><br>(WERNER UND KOLB WERKZEUG-<br>MASCHINEN GMBH)<br>   \* Gesamt; insbesondere<br>    Fig. 1 \*<br>     -- | 1 | |
| A | <u>US - A - 4 746 258</u><br>(LOOMER et al.)<br>   \* Gesamt; insbesondere<br>    Fig. 1,4 \*<br>     ---- | 1,6 | |

TECHNICAL FIELDS
SEARCHED (Int. Cl.⁵)

B 65 G

The present search report has been drawn up for all claims

| Place of search | Date of completion of the search | Examiner |
|---|---|---|
| WIEN | 07-05-1990 | PISSENBERGER |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO Form 1503 03 82